# FASCICULE DE BREVET EUROPEEN

(11) **EP 0 479 658 B1**
(45) Date de publication et mention de la délivrance du brevet: **20.10.1993**
(21) Numéro de dépôt: 91402600.0
(22) Date de dépôt: 30.09.1991
(51) Int. Cl.: H02P 7/285, H02K 23/20

(54) **Procédé de commutation de vitesses pour moteur électrique multipolaire à flux constant, et groupe moto-ventilateur à commutation de vitesses commandé selon le procédé**
Geschwindigkeitskommutationsverfahren für einen mehrpoligen elektrischen Motor mit konstantem Fluss und Lüftersatz mit Geschwindigkeitskommutation nach diesem Verfahren
Speed commutating process for a constant flux multi-polar electric motor and motor ventilator set with this speed commutating process

(30) Priorité: 01.10.1990 FR 9012068
(43) Date de publication de la demande: 08.04.1992
(73) Titulaire: VALEO THERMIQUE MOTEUR, 78320 Le Mesnil Saint-Denis (FR)
(72) Inventeur: Couetoux, Hervé, F-78000 Versailles (FR)
(74) Mandataire: Gamonal, Didier

(56) Documents cités:
- EP-A- 0 076 206
- EP-A- 0 445 015
- DE-A- 1 613 198

## Description

La présente invention concerne un procédé de commutation de vitesses de moteur électrique, notamment de moteur électrique à courant continu.

Elle concerne plus particulièrement un procédé de commutation pour la commande du dispositif de commutation de vitesses d'un moteur à courant continu à flux constant du type dont l'induit est à bobinage imbriqué et comporte n voies dont chacune est alimentée par un balai, tel que mentionné dans le document EP-A-0 076 206.

En outre, un dispositif de commutation est décrit et représenté dans la demande de brevet européen N°0 445 015 déposée au nom de la Demanderesse le 25 février 1991. Ce dispositif de commutation permet d'obtenir une vitesse de rotation du moteur de rang i compris entre 1 et n-1 en raccordant un groupe de i+1 balais aux bornes de la source d'alimentation en courant continu du moteur.

On pourra se reporter au contenu de cette demande de brevet pour prendre connaissance de manière détaillée de la conception du dispositif de commutation et des différents avantages qui résultent de sa mise en oeuvre et dont les principaux sont son prix relativement faible et son encombrement réduit.

Bien qu'un tel type de dispositif de commutation donne toute satisfaction dans son fonctionnement, on constate à l'usage qu'il a pour inconvénient de provoquer une usure irrégulière des balais d'alimentation des voies de l'induit.

Les balais utilisés dans les moteurs à courant continu sont généralement du type électrographitique fabriqués à partir de charbon amorphe, graphité par traitement thermique à haute température et aggloméré par des liants. L'usure que subissent les balais est d'une part mécanique et est liée au problème général de frottement de glissement des balais et d'autre part de nature électrique.

Des essais effectués par la Demanderesse ont fait apparaître que l'usure de nature électrique était prédominante et provoquait ainsi une usure la plus rapide du ou des balais actifs.

De ce fait, la durée de vie d'un moteur à courant continu du type mentionné précédemment peut se trouver fortement réduite par l'usure prématurée d'un seul balai.

Afin de remédier à cet inconvénient, l'invention propose un procédé de commutation de vitesses pour un moteur électrique à courant continu du type mentionné précédemment, caractérisé en ce qu'il consiste à modifier l'état de raccordement des balais en fonction d'une loi de commande, en modifiant la composition du groupe de i+1 balais à raccorder pour l'obtention d'une vitesse de rang i déterminée et/ou en interrompant le raccordement de K balai, où K est égal au moins à 1, et en établissant le raccordement d'au moins K + 1 balais distincts des balais précédemment raccordés lors d'une commutation de vitesses.

Grâce au procédé selon l'invention il est possible d'aboutir à une répartition de l'usure des balais sollicités du fait de leur raccordement électrique, en tentant d'équilibrer les temps d'alimentation électrique de chaque balai.

Selon d'autres caractéristiques de l'invention :
- la loi de commande du procédé consiste à sélectionner la composition du groupe de balais ou le balai dont on interrompt le raccordement en fonction de l'état de raccordement précédent et d'une séquence de sélection prédéterminée mémorisée ;
- la loi de commande consiste à sélectionner la composition du groupe de balais ou du balai dont on interrompt le raccordement par tirage aléatoire dans un registre d'états de raccordement ;
- la loi de commande consiste à provoquer un changement de l'état de raccordement du groupe de balais en fonction d'un paramètre d'horloge ;
- la loi de commande consiste à provoquer un changement de l'état de raccordement en fonction d'une dérivation d'une grandeur physique ou de franchissements en alternance de valeurs de seuils de cette grandeur physique ;
- la loi de commande consiste à sélectionner le groupe de balais ou ledit balai en fonction d'un diagnostic d'un nombre déterminé d'états précédents de raccordement.

Le procédé selon l'invention trouve particulièrement à s'appliquer pour la commutation de vitesses d'un moteur tétrapolaire à trois vitesses de fonctionnement, caractérisé en ce que l'un des balais est raccordé en permanence à l'une des bornes de la source d'alimentation en courant continu.

L'invention concerne également un groupe moto-ventilateur du type comportant un moteur électrique à courant continu et à flux constant, caractérisé en ce qu'il comporte un dispositif de commutation de vitesses commandé selon le procédé selon l'invention, le groupe moto-ventilateur pouvant comporter un moyen de commande commandé par une mesure de la température à réguler par l'action du groupe et dont le déclenchement entraîne la commutation du dispositif de commutation de vitesses.

L'invention trouve tout particulièrement à s'appliquer pour la commande du fonctionnement d'un groupe moto-ventilateur utilisé dans l'industrie automobile pour accélérer le refroidissement du moteur thermique du véhicule.

D'autres caractéristiques et avantages de l'invention apparaîtront à la lecture de la description détaillée qui va suivre pour la compréhension de laquelle on se reportera aux dessins annexés dans lesquels les figures représentent différents états de raccordement électrique des quatre balais d'un moteur tétrapolaire à courant continu.

La description du procédé de commutation selon l'invention qui va suivre sera faite dans le cadre de sa mise en oeuvre pour la commande de la commutation d'un moteur tétrapolaire à courant continu (c'est-à-dire comportant n = 4 voies) à trois vitesses de rotation de rangs i de un à trois également appelées petite vitesse (PV) (figures 1A à 1B), moyenne vitesse (MV) (figures 2A à 2C) et grande vitesse (GV) (figure 3).

Sur les figures, le moteur M est à chaque fois illustré de manière schématique avec ses quatre balais B1, B2, B3, B4. A côté de chacun des balais Bi, on a indiqué à chaque fois son état de raccordement électrique, soit par un signe + ou - lorsque le balai est raccordé à l'une des bornes de la source d'alimentation, soit par un zéro lorsque le balai n'est pas alimenté.

Dans les différents états de raccordement représentés aux figures, le balai B1 est constamment relié à la borne de polarité négative de la source de courant continu.

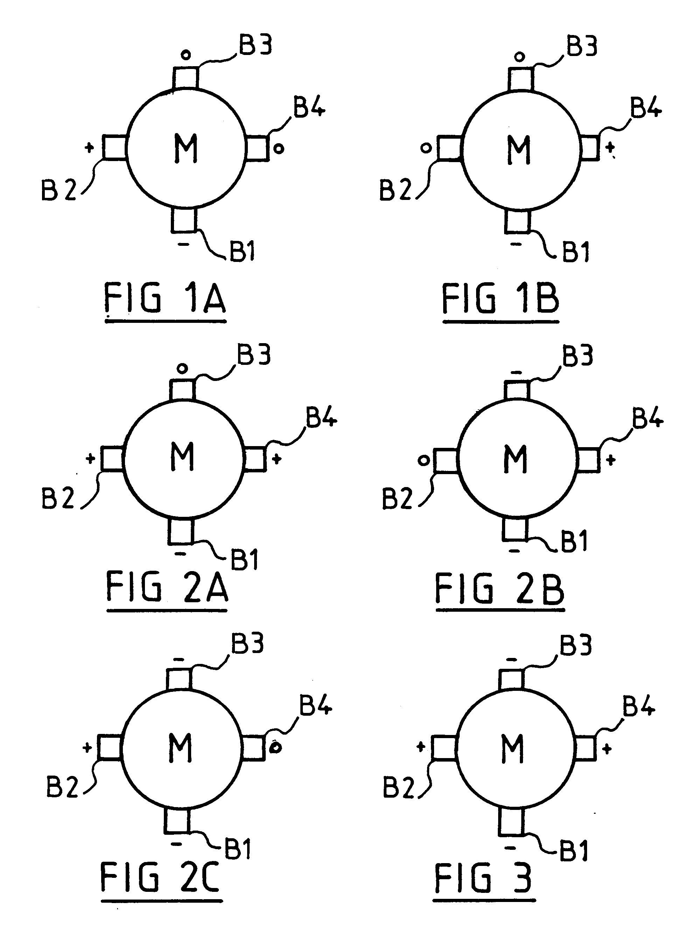

Le dispositif de commutation de vitesses tel qu'il a été décrit dans la demande de brevet mentionnée précédemment propose d'utiliser les trois états de raccordement des balais représentés aux figures 1A, 2A ou 2C et 3 correspondant respectivement aux trois vitesses possibles pour ce type de moteur tétrapolaire.

Avec ce choix d'états de raccordement, on constate que le balai B2 est toujours raccordé à la source d'alimentation quel que soit le rang de la vitesse commutée.

Afin de remédier à cet inconvénient et conformément à l'invention, il est proposé de procéder à une commutation de vitesses entre la petite vitesse et la moyenne vitesse en choisissant pour cette dernière l'état de raccordement représenté à la figure 2B dans laquelle le balai B2 n'est pas raccordé et dans laquelle les balais B1, B3 et B4 sont reliés à la source d'alimentation en courant continu. Les passages entre l'un et l'autre des états de raccordement représentés aux figures 1A et 2B, c'est-à-dire entre l'état B1, B2 et l'état B1, B3 et B4 (si l'on désigne ainsi les balais reliés à la source d'alimentation en courant continu), ont pour effet de réduire l'usure du balai B2. On aboutit ainsi à une répartition plus égale des temps de raccordement de chacun des balais commutés.

Bien entendu, dans le cas où l'état de raccordement pour la petite vitesse correspond à celui représenté à la figure 1B (B1,B4), il est alors souhaitable d'utiliser l'état de raccordement représenté à la figure 2C pour l'obtention de la moyenne vitesse (B1,B2,B3) dans lequel le balai B4 est au repos et le balai B2 est raccordé.

Cette première stratégie de choix d'états de raccordement est applicable lors d'une commutation de vitesses.

En fonctionnement à une vitesse de rang déterminé, c'est-à-dire en petite vitesse ou en moyenne vitesse, il est également possible de provoquer un changement, par commutation, de la composition du groupe des balais raccordés à la source d'alimentation qui permet d'obtenir cette vitesse de rotation.

Pour la petite vitesse il est ainsi possible d'évoluer entre les états représentés aux figures 1A et 1B c'est-à-dire entre les états B1, B2 et B1, B4.

Pour l'obtention de la moyenne vitesse il est possible d'évoluer entre les états représentés aux figures 2A, 2B et 2C, c'est-à-dire entre les états B1, B2, B4 ou B1, B3, B4, ou B1, B2, B3.

Il est à noter que l'ensemble des états de raccordement qui viennent d'être mentionnés correspondent au cas où le balai B1 est en permanence relié à la borne négative de la source d'alimentation en courant continu. Le procédé selon l'invention n'est pas limité à ce type de raccordement mais celui-ci est particulièrement économique car il permet d'effectuer la commutation au moyen d'une commande par trois relais indépendants.

La commande des changements d'états de raccordement, c'est-à-dire la stratégie permettant d'aboutir à une usure la plus également répartie des charbons peut être effectuée de différentes manières.

Si l'on dispose de moyens de mémorisation de l'état de raccordement précédent, il est possible de sélectionner la composition du groupe de balais à raccorder dans l'état suivant en fonction d'une séquence de sélection prédéterminée qui est également mémorisée.

Si l'on dispose par exemple d'un générateur de nombres aléatoires la sélection de la composition du groupe de balais ou du balai dont on interrompt le raccordement peut être effectuée par tirage aléatoire dans un registre d'états de raccordement.

Dans le cas où l'on change d'états de raccordement pour une même vitesse de fonctionnement, il est également possible d'utiliser un paramètre d'horloge pour obtenir une équirépartition dans le temps d'utilisation des différents états de raccordement.

Il est également possible d'utiliser la dérivation d'une grandeur physique ou des franchissements en alternance de valeurs de seuils de cette grandeur physique avec un hystérésis.

Dans le cadre de cette solution il est particulièrement avantageux d'utiliser comme grandeur physique la température du moteur ou d'une partie du circuit de refroidissement, grandeur donnée par un dispositif à thermocontacteur, les valeurs de cette grandeur étant déjà utilisées pour provoquer la sélection d'une des vitesses de rotation du moteur comme cela a été expliqué dans la demande de brevet précédemment mentionnée.

Il est également possible de tenir compte d'un diagnostic des états précédents de raccordement afin de modifier la loi de commande pour aboutir à une répartition plus égale de l'utilisation des balais et ceci notamment dans le cas d'une sélection par tirage aléatoire et/ou en fonction de la grandeur physique.

Le procédé selon l'invention n'est pas limité à son application à un moteur tétrapolaire, mais il trouve bien entendu à s'appliquer à un moteur à courant continu hétéropolaire à n voie pour lequel on veut sélectionner une vitesse de rang i compris entre 1 et n - 1 en raccordant un groupe de i + 1 balais du moteur aux bornes de la source d'alimentation en courant continu dont un des balais de la source d'alimentation.

Par exemple, et en restant dans le cadre d'une application au moteur tétrapolaire, il est possible de choisir tous les états de raccordement de deux balais consécutifs parmi les quatre pour l'obtention de la petite vitesse, mais cette solution est plus coûteuse car elle nécessite l'utilisation d'au moins un relais supplémentaire au dispositif de commutation.

Dans le cadre de la généralisation de l'invention, et pour un changement d'états de raccordement qui se produit lors d'une commutation de vitesses, il est nécessaire d'interrompre le raccordement de K balai, où K est égale au moins à 1, précédemment raccordé à la source d'alimentation et d'établir le raccordement d'au moins K + 1 balais distincts des balais précédemment raccordés pour obtenir, lors de cette commutation de vitesses, une modification de la répartition des balais raccordés aboutissant à une réduction de leur usure.

La solution économique avec le balai B1 constamment raccordé à la source d'alimentation trouve particulièrement à s'appliquer lorsque le procédé selon l'invention est utilisé pour la commande de la commutation de vitesses d'un groupe de moto-ventilateur de véhicule automobile. La solution la plus économique à mettre en oeuvre pour la stratégie de sélection de l'état de raccordement est celle utilisant des moyens de mémorisation de l'état précédent de raccordement.

## Revendications

1. Procédé de commutation de vitesses pour un moteur électrique à courant continu (M) à flux constant du type dont l'induit est à bobinage imbriqué et comporte n voies dont chacune est alimentée par un balai (B1,B2,B3,B4), procédé dans lequel une vitesse de rang i compris entre 1 et n - 1 est obtenue en raccordant un groupe de i + 1 balais aux bornes de la source d'alimentation en courant continu du moteur, caractérisé en ce qu'il consiste à modifier l'état de raccordement des balais en fonction d'une loi de commande en modifiant la composition du groupe de i + 1 balais à raccorder pour l'obtention d'une vitesse de rang i déterminée et/ou en interrompant le raccordement de K balai, où K est au moins égal à 1, et en établissant le raccordement de K + 1 balais distincts des balais précédemment raccordés lors d'une commutation de vitesses.

2. Procédé de commutation selon la revendication 1, caractérisé en ce que ladite loi de commande consiste à sélectionner la composition du groupe de balais ou le balai dont on interrompt le raccordement en fonction de l'état de raccordement précédent et d'une séquence de sélection prédéterminée mémorisée.

3. Procédé de commutation selon la revendication 1, caractérisé en ce que la loi de commande consiste à sélectionner la composition du groupe des balais ou le balai dont on interrompt le raccordement par tirage aléatoire dans un registre d'états de raccordement.

4. Procédé de commutation selon la revendication 1, caractérisé en ce que la loi de commande consiste à provoquer un changement de l'état de raccordement des balais en fonction d'un paramètre d'horloge.

5. Procédé de commutation selon la revendication 1, caractérisé en ce que la loi de commande consiste à provoquer un changement de l'état de raccordement en fonction d'une dérivation d'une grandeur physique ou de franchissements en alternance de valeurs de seuils de cette grandeur physique.

6. Procédé de commutation selon la revendication 1, caractérisé en ce que la loi de commande consiste à sélectionner le groupe de balais ou ledit balai en fonction d'un diagnostic d'un nombre déterminé d'états précédents de raccordement.

7. Procédé de commutation selon l'une quelconque des revendications précédentes pour la commutation de vitesses d'un moteur tétrapolaire, caractérisé en ce que l'un des balais (B1) est raccordé en permanence à l'une des bornes de la source d'alimentation.

8. Groupe moto-ventilateur comportant un moteur électrique (M) à courant continu et à flux constant, caractérisé en ce qu'il comporte un dispositif de commutation de vitesses commandé selon le procédé selon l'une quelconque des revendications précédentes.

9. Groupe moto-ventilateur selon la revendication 8, caractérisé en ce qu'il comporte un moyen de commande, commandé par une mesure de la température à réguler par l'action du groupe et dont le déclenchement entraîne la commutation du dispositif de commutation de vitesses.

## Patentansprüche

1. Geschwindigkeitskommutationsverfahren für einen Gleichstrom-Elektromotor (M) mit konstantem Fluß in der Ausführung, deren Anker mit einer überlappten Wicklung versehen ist und n Wege aufweist, die jeweils durch eine Bürste (B1, B2, B3, B4) gespeist werden, ein Verfahren, bei dem eine zwischen 1 und n - 1 liegende Ranggeschwindigkeit i dadurch erzielt wird, daß man eine Gruppe von i + 1 Bürsten an die Klemmen der Gleichstromquelle des Motors anschließt, **dadurch gekennzeichnet,** daß es aus einer Modifizierung des Anschlußzustandes der Bürsten entsprechend einem Steuerungsgesetz besteht, wobei die Zusammensetzung der Gruppe von i + 1 Bürsten, die zur Erzielung einer bestimmten Ranggeschwindigkeit i anzuschließen sind, modifiziert wird und/oder wobei die Verbindung von K Bürste unterbrochen wird, wobei K wenigstens gleich 1 ist, und wobei die Verbindung von K + 1 Bürsten hergestellt wird, die von denen verschieden sind, die zuvor bei einer Geschwindigkeitskommutation angeschlossen wurden.

2. Kommutationsverfahren nach Anspruch 1, **dadurch gekennzeichnet,** daß das genannte Steuerungsgesetz darin besteht, die Zusammensetzung der Bürstengruppe oder der Bürste auszuwählen, deren Verbindung entsprechend dem vorherigen Anschlußzustand und einer festgelegten, gespeicherten Auswahlfolge unterbrochen wird.

3. Kommutationsverfahren nach Anspruch 1, **dadurch gekennzeichnet,** daß das Steuerungsgesetz darin besteht, die Zusammensetzung der Bürstengruppe oder der Bürste auszuwählen, deren Anschluß durch regelloses Herausziehen in einem Anschlußzustandsregister unterbrochen wird.

4. Kommutationsverfahren nach Anspruch 1, **dadurch gekennzeichnet,** daß das Steuerungsgesetz darin besteht, entsprechend einem Taktgeberparameter eine Veränderung des Anschlußzustands der Bürsten herbeizuführen.

5. Kommutationsverfahren nach Anspruch 1, **dadurch gekennzeichnet,** daß das Steuerungsgesetz darin besteht, eine Veränderung des Anschlußzustands entsprechend einer Ableitung einer physikalischen Größe oder entsprechend abwechselnden Überschreitungen von Schwellenwerten dieser physikalischen Größe zu bewirken.

6. Kommutationsverfahren nach Anspruch 1, **dadurch gekennzeichnet,** daß das Steuerungsgesetz darin besteht, die Bürstengruppe oder die genannte Bürste entsprechend der Diagnose einer bestimmten Anzahl früherer, festgelegter Anschlußzustände auszuwählen.

7. Kommutationsverfahren nach einem der vorherigen Ansprüche für die Geschwindigkeitskommutation eines vierpoligen Motors, **dadurch gekennzeichnet,** daß eine der Bürsten (B1) fest mit einer der Klemmen der Stromquelle verbunden ist.

8. Lüftersatz, enthaltend einen Gleichstrom-Elektromotor (M) mit konstantem Fluß, **dadurch gekennzeichnet,** daß er eine Geschwindigkeitskommutationsvorrichtung enthält, die nach dem Verfahren gemäß einem der vorherigen Ansprüche gesteuert wird.

9. Lüftersatz nach Anspruch 8, **dadurch gekennzeichnet,** daß er ein Steuerungsmittel enthält, welches durch Messung der zu regulierenden Temperatur beim Wirksamwerden des Lüftersatzes betätigt wird und dessen Auslösung zur Umschaltung der Geschwindigkeitskommutationsvorrichtung führt.

## Claims

1. A method of changing speeds in a constant flux direct current electric motor (M), of the type in which the armature is an encapsulated winding and has n poles, each of which is supplied through a brush (B1, B2, B3, B4), in which method a speed of level i, where i is between 1 and n-1, is obtained by connecting a group of i+1 brushes to the terminals of the direct current supply source for the motor, characterised in that it comprises modifying the state of connection of the brushes in accordance with a control law, by modifying the composition of the group of i+1 brushes to be connected in order to obtain a motor speed at a predetermined level i, and/or by interrupting the connection of K brushes, where K is at least equal to 1, and by establishing connection of K+1 brushes, different from the brushes previously connected during a speed changing operation.

2. A speed changing method according to Claim 1, characterised in that the said control law consists in selecting the composition of the group of brushes, or of the brush, the connection of which is to be interrupted, as a function of the preceding state of connection and of a predetermined memorised selection sequence.

3. A speed changing method according to Claim 1, characterised in that the control law consists in selecting the composition of the group of brushes, or of the brush, the connection of which is to be interrupted, by random selection in a register of states of connection.

4. A speed changing method according to Claim 1, characterised in that the control law consists in causing the state of connection of the brushes to be changed as a function of a time-dependent parameter.

5. A speed changing method according to Claim 1, characterised in that the control law consists in causing the state of connection to change as a function of either a differentiation of a physical quantity, or alternating occurrences of threshold values of the said physical parameter.

6. A speed changing method according to Claim 1, characterised in that the control law consists in selecting the group of brushes, or the said brush, as a function of a diagnosis of a predetermined number of preceding states of connection.

7. A speed changing method according to any one of the preceding Claims for changing speeds in a quadruple pole motor, characterised in that one of the brushes (B1) is permanently connected to one of the terminals of the supply source.

8. A motorised fan unit comprising a constant flux direct current electric motor (M), characterised in that it includes a speed changing means controlled in accordance with the method according to any one of the preceding Claims.

9. A motorised fan unit according to Claim 8, characterised in that it includes a control means which is controlled by a measurement of the temperature to be regulated by the action of the unit, such that commencement of operation of the unit causes the speed changing means to be switched.
